# EUROPEAN PATENT SPECIFICATION

(11) **EP 2 278 601 B1**
(45) Date of publication and mention of the grant of the patent: **01.02.2017**
(21) Application number: 09009396.4
(22) Date of filing: 20.07.2009
(51) Int. Cl.: H01H 33/662

(54) **Embedded pole part with an isolating housing made of thermoplastic material**
Eingebetteter Teil einer Stange mit einem isolierenden Gehäuse aus thermoplastischem Material
Élément de pôle intégré avec boîtier isolé fabriqué en matériau thermoplastique

(43) Date of publication of application: 26.01.2011
(73) Proprietor: ABB Schweiz AG, 5400 Baden (CH)
(72) Inventor: Shang, Wenkai, Dr.-Ing., 40878 Ratingen (DE)
(74) Representative: Schmidt, Karl Michael

(56) References cited:
- EP-A- 0 485 306
- DE-A1- 2 320 744
- DE-A1- 2 610 440
- DE-A1-102004 047 260
- DE-A1-102007 028 205
- DE-A1-102007 041 971
- FR-A- 1 428 094
- FR-A- 2 628 258
- US-S1- D 558 149
- ABB B. FENSKI H. FINK T. FUGEL D. GENTSCH T. RÜMENAPP: "Vacuum interrupteurs and embedded poles for medium voltage" 31 March 2007 (2007-03-31), ETZ VDE VERLAG , GERMANY , XP002562079 Retrieved from the Internet: URL:http://www05.abb.com/global/scot/scot2 35.nsf/veritydisplay/4c3de511fc561a62c1257 38c003c5611/$File/Offprint_ETZ_S3.2007_E.p df> * pages 1-4 *

## Description

The invention relates to an embedded pole part with an isolating housing made of thermoplastic material, which embedds a vacuum interrupter as well as the electric terminals.

For embedded pole parts, it is a key-condition, to strengthen the pole part mechanically in such a way, that it is strong enough to withstand the short circuit current. Furthermore, it should have mechnical withstand, to fix the vacuum interrupter in the braker arrangement during mechanical stress if it is operated, th. m. switched. Under these conditions, it is also important to care for dielectric stability.

The design of embedded pole normally has cylinder shape form in order to fix the circuit breaker base. There is no transition area, normally from a cylindric form directly to a square form at the bottom.

Furthermore several surface structures for embedded pole parts are disclosed in DE 102007041971 A1. Horizontal ring structure are arranged on the surface in order to increase the creepage length.

So it is an object of the invention, to strengthen the mechnical and dielectric parameters of such a pole part especially for the case of short circuit current, and also in each case of opening or closing the contact of the vacuum interrupter.

This is realized in that at the outer surface of the housing horizontal and/or vertical aligned 3-dimensional structures joined by material engagement are implemented into the thermoplastic material, in order to achieve a higher mechanical stiffness as well as higher creepage length of the pole part. By this invention the base area of the pole part is strengthed mechanically as well as in the dielectric way.

Very important in this case is the use of the features for thermoplastic material instead of duroplastic material (Epoxy)

An advantageous embodiment is, that the structures are implemented in such a way, that the remaining wall-thickness of at least the base part of the isolating housing is uniform. This technical consequence is basical. The wall thickness could be implemented in all areas, at least at the bottom part of the pole part in a uniform wall thickness. Normally the wall thickness especially of the bottom part is bigger, in order to strengthen the mechanical stiffness. By implementing the above mentioned structures, uniform wall thickness can be used. This causes saving of material without loss of mechanical stiffness and/or dielectric performance. This fact is technically crucial.

According to the invention, the structures are L-shaped and/or U-shaped structures. This strengthens the mechanical as well as the dielectric parameters of the pole part.

A further embodiment ist, that the structures are placed in the lower region near to the lower electric terminal or near to the bottom of the pole part.

A further embodiment is, that the L-shaped structures are aligned are aligned in axial direction of the pole part.

A further embodiment is, that the U-shaped structures are aligned perpendicular to the axial direction of the pole part.

A special embodiment of the invention is, that several concentric ring-shaped structures are aligned and implemented into the housing around the lower terminal.

By this, the area around the lower contact terminal is mechnically very strong, but it has a symmetric arrangement of creep distance structures. This is effectice and therefore advantageous to locate it such a geometric structure there. Furthermore the aforesaid structures can also be implemented in the coverage around the the higher electric terminal.

An advantageous embodiment is, that horizontal rib-structures are aligned and geometrically superposed with vertical L-shaped structures at the bottom region under the lower terminal of the pole part. So the construction in the base area is optimized to achieve the optimal stiffness of the embedded pole and also mechanical strength for the embedded pole. The creepage distance is also optimized, because it is folded into this structure.

With this invention the pole part has also a smooth transition from cylinder (round) shape to the square base, without increasing the wall thickness.

That means, that the wall thickness of the housing remains uniform, except of the 3-dimensional structures which are implemented. By the aforesaid structures, it is possible to prevent voids or inhomogenities in the thermoplastic material, by the fact, that an uniform wall thickness can be realized easy, even under the condition of high mechanical withstand. That means, a uniform wall thickness can support a plastic material, free from voids.

Further it is an advantageous embodiment, that the concentric structures have different depth.

A further embodiment is, that the concentric structures are closed or partly open ring structures. That means, that the ring segments can be closed rings, or even only separate ring segments. In both cases, is given a creepage path extension.

Embodiments of the invention are displayed in the drawing.
- Fig. 1:: Pole part
- Fig. 2:: Detail of the base of the pole part
- Fig. 3:: Pole part with concentric structures
- Fig. 4:: Pole part with u-shaped structures at the bottom part

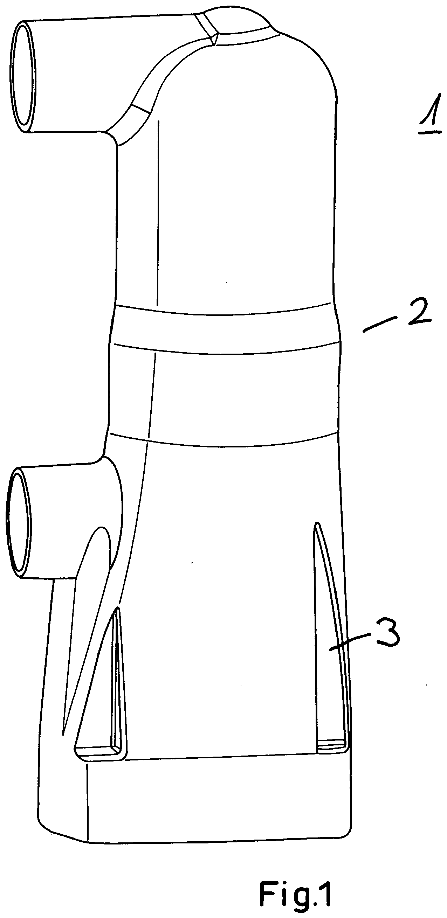

Figure 1 shows a first embodiment, with a flat shape of the housing 1 of an embedded pole part. At the base part of the pole part, under the lower electric terminal, there are L-shaped vertical (in axial direction of the pole part) structures 3 implemented. They are implemented in an area, which has a smooth transition 2 from a nearly round cylindric to a nearly squared cross section. The structures are placed in such a way, that they end in the corners of the nearly squared cross section of the base part.

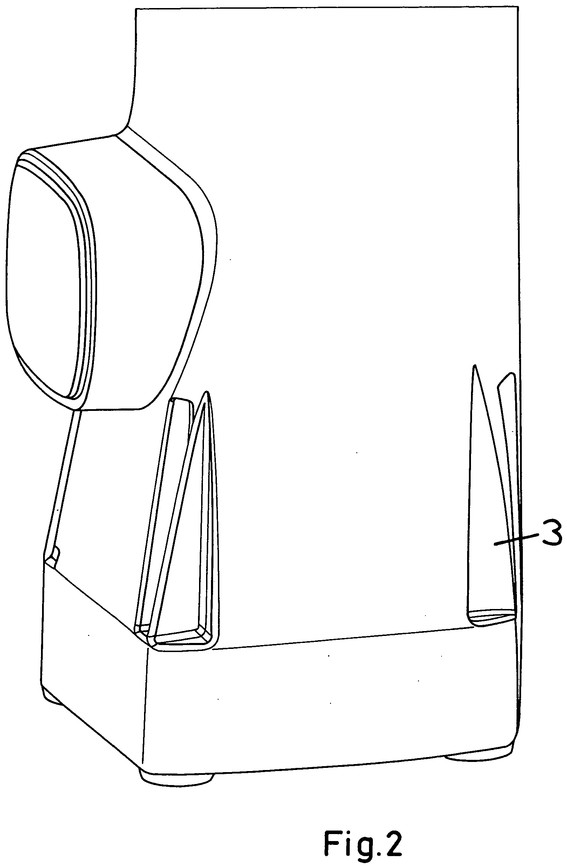

Figure 2 shows an embodiment, in which additionally to figure 1, beneath the vertical L-shaped structures 3 a further vertical simple line structure is arranged, th. m. implemented.
This increases the mechanical stiffness.

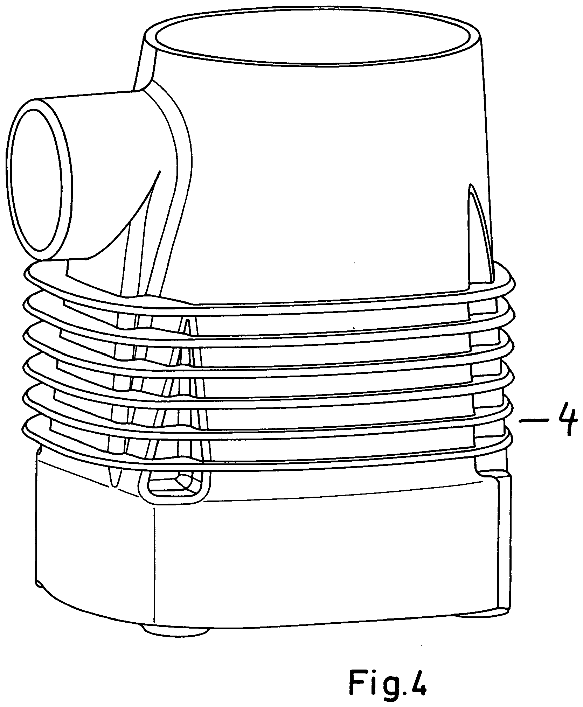

Figure 4 shows only the base part of housing 1. Under the lower electric terminal are arranged L-shaped vertical structures 3 and U-shaped horizontal structures 4, in structural superposition. This gives a very high performance in mechanical stiffness, as well as in high dielectric stability, because of extension of creepage path in this critical area.

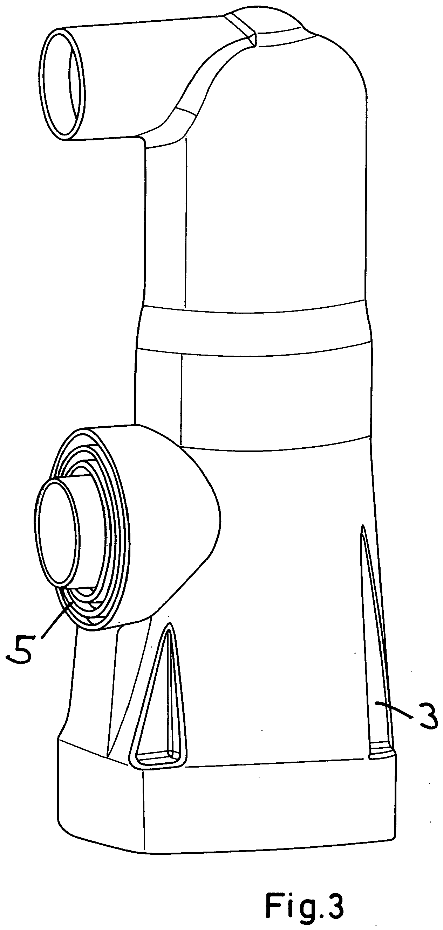

Figure 3 shows a pole part, with a special structure at the lower electric terminal. This structural lines 5 are arranged in a concentrical way. This also gives high mechanical resistivity as well an extension of the creepage path.
This structure arrangement can also be arranged at the higher electric terminal as well.

I all cases, it is fundamental for this invention, that mechanical requirements are fitted to dielectric requirements in a cumulative way.

This is important, for example for the feature of a uniform wall thickness in the area, in which are implemented the strengthening structures into the plastic housing. This area stands under mechnical stress during switching operation of the interrupter. But to use a uniform wall thickness for thermoplastic material prevents the aforesaid voids. This fact furthermore supports the dielectric requirements. So it is a cumulative complex technical effect of the claimed features.

## Claims

1. Embedded pole part with an isolating housing (1) made of thermoplastic material, which embedds a vacuum interrupter as well as the electric terminals, wherein at the outer surface of the housing (1) **L-shaped vertical** and/or U-shaped horizontal aligned 3-dimensional structures (3) joined by material engagement are implemented into the thermoplastic material, in order to achieve a higher mechanical stiffness as well as higher creepage length of the pole part, **and** that the structures (3) are placed in the lower region near to the lower electric terminal or near to the bottom of the pole part and that the structures are implemented in an area, which has a smooth transition (2) from a nearly round cylindric to a nearly squared cross section, wherein the vertical direction is an axial direction of the pole part.

2. Embedded pole part according to claim 1,
**characterized in,**
**that** the structures (3, 4) are implemented in such a way, that the remaining wall-thickness of at least the base part of the isolating housing (1) is uniform.

3. Embedded pole part according to claim 1 or 2,
**characterized in,**
**that** several concentric ring-shaped structures (5) are aligned and implemented in the housing (1) around the lower and/or the higher electric terminal.

4. Embedded pole part according to claim 1 or 2,
**characterized in,**
**that** rib-structures (4) are aligned together, and geometrically superposed with the vertical L-shaped structures (3) in the bottom region under the lower terminal of the pole part.

5. Embedded pole part according to claim 4, **characterized in,**
**that** the rib structures (4) are limited in length, so that the rib structures end in the pole housing front or side structure.

6. Embedded pole part according to claim 3,
**characterized in,**
**that** the concentric structures (5) have different depth.

7. Embedded pole part according to claim 3 or claim 6,
**characterized in,**
**that** the concentric structures (5) are closed or partly open ring structures.

## Patentansprüche

1. Eingebetteter Teil einer Stange mit einem isolierenden Gehäuse (1) aus thermoplastischem Material, das einen Vakuum-Trennschalter sowie die elektrischen Anschlüsse einbettet, wobei an der Außenoberfläche des Gehäuses (1) L-förmige vertikal und/oder U-förmige horizontal ausgerichtete 3-dimensionale Strukturen (3), die durch Materialeingriff verbunden sind, in dem thermoplastischen Material implementiert sind, um eine höhere mechanische Steifigkeit sowie höhere Kriechlänge des Teils der Stange zu erreichen, und wobei die Strukturen (3) in dem unteren Bereich in der Nähe des unteren elektrischen Anschlusses oder in der Nähe der Unterseite des Teils der Stange angeordnet sind, und wobei die Strukturen in einem Bereich implementiert sind, der einen nahtlosen Übergang (2) von einem fast runden zylindrischen zu einem fast quadratischen Querschnitt aufweist, wobei die vertikale Richtung eine Achsenrichtung des Teils der Stange ist.

2. Eingebetteter Teil einer Stange nach Anspruch 1,
**dadurch gekennzeichnet,**
**dass** die Strukturen (3, 4) derartig implementiert sind, dass die verbleibende Wanddicke von mindestens dem Basisteil des isolierenden Gehäuses (1) einheitlich ist.

3. Eingebetteter Teil einer Stange nach Anspruch 1 oder 2,
**dadurch gekennzeichnet,**
**dass** mehrere konzentrische ringförmige Strukturen (5) in dem Gehäuse (1) um den tieferen und/oder den höheren elektrischen Anschluss herum ausgerichtet und implementiert sind.

4. Eingebetteter Teil einer Stange nach Anspruch 1 oder 2,
**dadurch gekennzeichnet,**
**dass** Rippenstrukturen (4) zusammen ausgerichtet und mit den vertikalen L-förmigen Strukturen (3) in dem unteren Bereich unter dem unteren Anschluss des Teils der Stange überlagert sind.

5. Eingebetteter Teil einer Stange nach Anspruch 4,
**dadurch gekennzeichnet,**
**dass** die Rippenstrukturen (4) in der Länge beschränkt sind, sodass die Rippenstrukturen in der Vorder- oder Seitenstruktur des Stangengehäuses enden.

6. Eingebetteter Teil einer Stange nach Anspruch 3,
**dadurch gekennzeichnet,**
**dass** die konzentrischen Strukturen (5) eine unterschiedliche Tiefe aufweisen.

7. Eingebetteter Teil einer Stange nach Anspruch 3 oder Anspruch 6,
**dadurch gekennzeichnet,**
**dass** die konzentrischen Strukturen (5) geschlossene oder teilweise offene Ringstrukturen sind.

## Revendications

1. Élément de pôle intégré avec un boîtier isolé (1) fabriqué à partir de matériau thermoplastique, qui encastre un interrupteur de vide ainsi que les bornes électriques, dans lequel, au niveau de la surface extérieure du boîtier (1), des structures tridimensionnelles (3) alignées verticales en forme de L et/ou horizontales en forme de U jointes par une mise en prise par matière sont mises en oeuvre dans le matériau thermoplastique, afin d'atteindre une rigidité mécanique plus élevée ainsi qu'une longueur de fuite plus importante de l'élément de pôle et dans lequel les structures (3) sont placées dans la région inférieure à proximité de la borne électrique inférieure ou à proximité du fond de l'élément de pôle et dans lequel les structures sont mises en oeuvre dans une zone ayant une transition (2) en douceur d'une section transversale quasiment de forme cylindrique ronde à une section transversale quasiment carrée, dans lequel la direction verticale est une direction axiale de l'élément de pôle.

2. Élément de pôle intégré selon la revendication 1, **caractérisé en ce que** les structures (3, 4) sont mises en oeuvre de telle sorte que l'épaisseur de paroi restante d'au moins la partie de base du boîtier isolé (1) est uniforme.

3. Élément de pôle intégré selon la revendication 1 ou 2, **caractérisé en ce que** plusieurs structures (5) annulaires de forme concentrique sont alignées et mises en oeuvre dans le boîtier (1) autour de la borne électrique inférieure et/ou supérieure.

4. Élément de pôle intégré selon la revendication 1 ou 2, **caractérisé en ce que** des structures côtelées (4) sont alignées ensemble et superposées de façon géométrique avec les structures (3) en forme de L verticales dans la région de fond sous la borne inférieure de l'élément de pôle.

5. Élément de pôle intégré selon la revendication 4, **caractérisé en ce que** les structures côtelées (4) sont limitées en longueur, de sorte que les structures côtelées prennent fin dans la structure avant ou latérale du boîtier de pôle.

6. Élément de pôle intégré selon la revendication 3, **caractérisé en ce que** les structures concentriques (5) ont une profondeur différente.

7. Élément de pôle intégré selon les revendications 3 ou 6, **caractérisé en ce que** les structures concentriques (5) sont des structures annulaires fermées ou partiellement ouvertes.
